# EUROPEAN PATENT APPLICATION

(11) **EP 1 415 538 A1**
(43) Date of publication of application: **06.05.2004**
(21) Application number: 02447207.8
(22) Date of filing: 04.11.2002
(51) Int. Cl.: A21D 2/14, A21D 8/04, A21D 2/22

(54) **Rhamnolipids in bakery products**

(71) Applicant: Puratos Naamloze Vennootschap, 1702 Groot-Bijgaarden (BE)
(72) Inventor: Van Haesendonck, Ingrid Paula, Hilda, B-2800 Mechelen (BE); Vanzeveren, Emmanuel, Claude, Albert, B-1030 Brussel (BE)
(74) Representative: Van Malderen, Joelle

(57) **Abstract**

The present invention is related to a method for the improvement of dough stability, bread volume and microbial deterioration during the baking process of bakery products which comprises the step of adding a sufficiently effective amount of rhamnolipid in said bakery products. The present invention further relates to an improver for the improvement of dough stability, bread volume and microbial deterioration during the baking process of bakery products, characterised in that it comprises at least one intermediate thermostable or thermostable protease.

## Description

### Field of the invention

The present invention is related to the use of rhamnolipids for volume enhancement and for texture modification in bakery and pastry products.

### Background of the invention

The consumers prefer to buy a voluminous loaf of bread with a well aerated and supple texture. Volume increase has always been a challenge to producers of bakery ingredients.

Traditionally the volume is obtained by the use of yeast. The loaf's volume is due to fermentation that produces carbon dioxide and ethanol (rising). This gas is expanded and the ethanol is evaporated by heating during the baking. This phenomena causes gas bubbles in the dough. The flour's quality and the baking process have much importance. The kneading is essential to incorporate air into the dough. Temperature and time during fermentation have much influence on yeast growing and thus on carbon gas production. The optimal temperature for yeast fermentation is between 28°-32°C. Indirectly, each parameter influencing yeast growing and yeast fermentation can have an effect on the final volume.

Bakers often want to reduce fermentation time and have voluminous loafs with all flour qualities.

There is a number of ingredients known to improve the volume of bread. Ascorbic acid is well-known to enhance volume since 1935 (Food Biochemistry, Belitz H.O. and Grosh W., second edition, Springer, Berlin, 1999, 670-671). Flour with 20 to 200 ppm ascorbic acid added, gives loaf with a bigger volume.

Another oxidant agent giving sensible volume increase is potassium bromate. Quantities around 100 ppm increase the volume about 25% but in most countries the bromate level is limited up to 75 ppm. When it is used at higher rates it opens the crumb structure of the bread and causes a bad smell in the bread.

ADA or Azodicarbonamide is also of interest as a flour improver.

Enzymes like fungal α-amylases or xylanases have also good effects on the bread volume. Fungal α-amylases hydrolyse starch and increase the concentration of free sugars. These free sugars can be fermented by the yeast giving more volume (Cauvain S.P. and Chamberlain N., (1988), Journal of Cereal Science **8**, 239-248).

The xylanases will hydrolyse at random in the xylan backbone of arabinoxylan which can lead to the breakdown of water un-extractable araboxylan into water extractable araboxylan. As a consequence, the final volume will increase (US 3,512,992).

Emulsifiers like DATEM (Diacetyl Tartaric Acid ester of monoglycerides) are already used since decades. It has a positive influence on volume when it is used between 0.1% to 0.5% ( Köhler P. and Grosh W. (1999), Journal of Agriculture and Food Chemistry, **47** (5) 1863-1869) Usages above 0.5% don't have any additional volume effect. This volume effect can be explained by the chemical structure of DATEM: it is able to link hydrophobic and hydrophilic parts of different gluten chains so that a better developed gluten network is obtained. Another explanation can be found in the liquid layer theory that purposes better gas retention by a liquid structure around the gas bubbles (Tsen C.C. and Weber J. (1981), Cereal Chemistry, **58** (3) 180-181)

CSL and SSL (respectively Calcium stearyl lactate and sodium stearyl - 2 - lactate) have also significant effect on volume, but less than results obtained with DATEM (Lorenz K. (1983), Bakers Digest. 57 (5), 6-9). With 0.3% of SSL the loaf's volume rises around 105%.

Use of glycoside ester of condensate of a polyol and a pyranoglycosyl as volume improver in bread is patented (GB 1 322 706).

Active components extracted from residues of ethanolic and other fermentations of micro-organisms are natural improvers for yeast raised goods. Those components include nicotinamide adenosine dinucleotide and its phosphate, flavin adenosine nucleotide *etc.* and are "natural" reducing-oxidising agents, who can replace "chemical" ones such as potassium bromate, sodium bisulfite, azodicarbonamide, etc. (WO 88/03365).

Volume enhancing is generally associated with texture modification. These modifications are mostly positive. They can improve the crumb's softness and elasticity. On the contrary, additives like monoglycerides have effect on softness, but no significant effect on volume.

Volume enhancing is limited first by the additive's limits. A maximal volume is obtained with around 0.3% of DATEM. This concentration gives a volume increase around 40%.

However, economical and technical constraints limit the use of large quantities of additives; and consumers prefer non-synthetic additives.

### State of the art

Rhamnolipid is a surface active agent containing rhamnose and most commonly beta-hydroxydecanoic acid.

Rhamnolipids can lower both the air/water and the hexadecane/water surface tension significantly.

Practical applications of the bio-emulsifier are as decontamination agent in oil areas, tertiary oil recovery and in cosmetic and pharmaceutical sectors. The only known uses of rhamnolipids in food applications are to preserve freshness of fruits, to emulsify flavour oils and as flavours precursors.

A possible source of rhamnolipids is the culture broth of *Pseudomonas sp.* fermentation or chemical synthesis. Attempts are made to produce these bio-emulsifiers with genetically modified micro-organisms.

### Summary of the invention

A first aspect of the present invention is related to a method for the increase of the stability of the dough or batter and the volume of the bakery product (bread, cake or sponge cake), to improve the structure of the crumb during the baking process and decrease microbiological deterioration of the bakery product. For bakery products an increased dough or batter stability means improved shock resistance (important during mechanical operations) and improved resistance to collapse during prolonged fermentation. Said method comprises the step of adding a sufficiently effective amount of the active component to the ingredients of said bakery products.

Such rhamnolipids can be added as an aqueous solution (in a liquid improver) or a dry powder (in a powder mix).

In the method and bread improver composition according to the invention, the rhamnolipid can be combined with other additives such as synthetic emulsifiers (monoglycerides, diglycerides, diacetyl tartaric acid of monoglycerides, stearoyllactylates, lecithine ), enzymes (α-amylase, xylanases, lipases, oxido reductases, proteins) and oxidantia (ascorbic acid, azodicarbonamide) which will improve dough stability, increase bread volume and improve crumb texture. Different synergistic or cumulative effects are present depending on recipe and application.

Therefore, the method according to the invention will result in improved bakery products which are preferably selected from the group consisting of bread, hard rolls, soft rolls, hamburger buns, baguettes, flat bread, pizza, cake and sponge cake produced in a direct method as well as overnight fermentation or frozen dough.

Another embodiment of the present invention is an improver composition, liquid or powder, or ready to use optimized mix, liquid or powder, comprising the rhamnolipid. An improver composition is a well-known concept amongst bakers. It is a mixture of active ingredients such as enzymes, emulsifiers and oxido-reductantia, which are mixed with the usual ingredients for making bread, hard rolls, soft rolls, hamburger buns, baguettes, flat bread, pizza, cake or sponge cake.

The present invention will be described hereafter in detail in the following non-limiting example.

### Examples

The baking tests were performed in 100 g bread. The basic recipe was:

| | |
|---|---|
| Flour Surbi | 100 |
| Water | 58 |
| Fresh Yeast (Bruggeman, Belgium) | 5 |
| Sodium Chloride | 2 |
| Dextrose | 2 |
| Ascorbic acid | 0.004 |

The following breadmaking process was used: The ingredients were mixed for 4'4" in a National 100g pin-mixer. After bulk fermentation for 20' at 25°C, 150 g dough pieces were made up using the Euro 200S^{TM} (Bertrand-Electrolux Baking) set at R7/L9 and moulded. The dough pieces are proofed at 35°C for 50' at 95% relative humidity. Then the breads are baked at 225°C in a National Manufacturing^{TM} (Lincoln, NE) oven. It is obvious to one skilled in the art that the same end results can be obtained by using equipment of other suppliers.

The volume of the bread was measured by rapeseed displacement.

### Effect of rhamnolipid on Specific Loaf Volume

The effect of addition of rhamnolipid on loaf volume was compared to the effect of diacetyl tartaric acid of monoglycerides. Addition of rhamnolipids did change specific loaf volume.

**Table 1**

| Dosage in % on flour | DATEM | Rhamnolipid |
|---|---|---|
| 0 | 100 | 100 |
| 0.025 | | 130 |
| 0.05 | | 134 |
| 0.075 | | 135 |
| 0.1 | 126 | 147 |
| 0.2 | 130 | 153 |
| 0.3 | 141 | |

The examples show that the use of rhamnolipid, at a dosage 8 times smaller than datem, unexpectedly increases bread volume significantly.

## Claims

1. Method for the increase of baked bread volume of bakery products comprising the step of adding a sufficiently effective amount of rhamnolipid in the preparation of said bakery products.

2. Method for the improvement of dough stability during the baking process of bakery products comprising the step of adding a sufficiently effective amount of rhamnolipid in the preparation of said bakery products.

3. Method for improving microbial conservation of bakery products, comprising the step of adding a sufficiently effective amount of rhamnolipid in the preparation of said bakery products.

4. Method according to any of the claims 1, 2 or 3, **characterised in that** the rhamnolipid is added to the ingredients as a dry powder, an aqueous solution or an emulsion.

5. Method according to any of the preceding claims, further comprising the step of adding other additives selected from the group consisting of (fungal) α-amylases, potasium bromate, xylanases, lipases, oxido-reductases, ascorbic acid, azodicarbonamide, monoglycerides, diacetyl tartaric acid of monoglycerides, stearoyllactylates and propionates.

6. Method according to any one of the preceding claims, **characterised in that** the bakery product is selected from the group consisting of bread, hard rolls, soft rolls, hamburger buns, baguettes, flat bread, pizza, sponge cakes and cakes.

7. Method according to any of the preceding claims, further comprising an improvement of crumb texture of the bakery products.

8. Bread improver composition which comprises a sufficient amount of rhamnolipids and other usual active ingredients preferably selected from the group consisting of enzyme emulsifiers and oxido reductancia.

9. Bread improver composition according to the claim 8, wherein the bread improver composition is in the form of a dry powder, a aqueous solution or an emulsion.

10. Bread improver composition according to the claims 8 or 9, wherein the rhamnolipids are obtained from a culture broth of pseudomonas sp. fermentation.
